# EUROPÄISCHE PATENTSCHRIFT

(11) **EP 2 144 800 B1**
(45) Veröffentlichungstag und Bekanntmachung des Hinweises auf die Patenterteilung: **10.08.2016**
(21) Anmeldenummer: 08717429.8
(22) Anmeldetag: 05.03.2008
(51) Int. Cl.: B60W 20/00, B60K 6/48, B60K 6/387, B60W 10/02, B60W 10/08, B60W 10/06, B60W 50/00

(54) **VERFAHREN UND VORRICHTUNG ZUR KOMPENSATION EINES ÜBERTRAGUNGSMOMENTS EINER TRENN- ODER HYBRID-KUPPLUNG EINES HYBRIDANTRIEBS**
METHOD AND DEVICE FOR COMPENSATING FOR A TRANSMISSION TORQUE OF A SEPARATING OR HYBRID CLUTCH OF A HYBRID DRIVE
PROCÉDÉ ET DISPOSITIF DE COMPENSATION D'UN MOMENT DE TRANSMISSION D'UN EMBRAYAGE DE SÉPARATION OU HYBRIDE D'UN ENTRAÎNEMENT HYBRIDE

(30) Priorität: 06.03.2007 DE 102007010770
(43) Veröffentlichungstag der Anmeldung: 20.01.2010
(73) Patentinhaber: Robert Bosch GmbH, 70442 Stuttgart (DE)
(72) Erfinder: SEEL, Andreas, 71282 Hemmingen (DE)
(86) Internationale Anmeldenummer: PCT/EP2008/052679
(87) Internationale Veröffentlichungsnummer: WO 2008/107459

(56) Entgegenhaltungen:
- AT-B- 413 806
- DE-A1- 10 260 435
- DE-A1-102004 062 012
- FR-A- 2 882 698
- US-A1- 2003 001 390

## Beschreibung

Die Erfindung betrifft ein Verfahren und eine Vorrichtung gemäß dem Oberbegriff der Ansprüche 1 bzw. 6.

Hybridantriebe von Kraftfahrzeugen umfassen gewöhnlich einen Verbrennungsmotor und mindestens einen Antriebsmotor in Form einer Elektromaschine, so dass die Kraftfahrzeuge wahlweise in einem rein elektrischen Betrieb allein durch die Elektromaschine, in einem reinen Motorbetrieb allein durch den Verbrennungsmotor oder in einem hybriden Betrieb sowohl durch die Elektromaschine und den Verbrennungsmotor angetrieben werden können.

Um den Verbrennungsmotor beim Übergang vom rein elektrischen Betrieb in den hybriden Betrieb mit Hilfe der Elektromaschine durch einen sogenannten "Schlupfstart" zu starten, sind Hybridfahrzeuge im Allgemeinen zwischen der Elektromaschine und dem Verbrennungsmotor mit einer sogenannten Trenn- oder Hybrid-Kupplung ausgestattet, die beim Schließen Abtriebswellen der Elektromaschine und des Verbrennungsmotors miteinander verbindet. Die Trenn- oder Hybrid-Kupplung ist üblicherweise als Schleifkupplung oder als Proportionalkupplung ausgeführt, wobei eine Proportionalkupplung eine Kupplung ist, die im Gegensatz zu einer rein schaltenden Kupplung die Einstellung eines gewünschten Übertragungsmoments gestattet.

Wenn die Trenn- oder Hybrid-Kupplung während eines rein elektrischen Betriebs des Hybridfahrzeugs aktiviert und geschlossen wird, um den Verbrennungsmotor durch Übertragung des eingestellten Übertragungsmoments zum Verbrennungsmotor zu starten, kommt es an der Trenn- oder Hybrid-Kupplung über einen gewissen Zeitraum zum Auftreten eines Schlupfs zwischen den Abtriebswellen der Elektromaschine und des Verbrennungsmotors, bis sich der letztere mit derselben Drehzahl wie die erstere dreht, woher der Name "Schlupfstart" rührt.

Beispielsweise ist aus der gattungsbildenden FR 2 882 698 A ein Verfahren zum schnellen Starten eines Hybrid-Fahrzeugs bekannt. Die DE 10 2004 062 012 A1 zeigt überdies ein Verfahren zum Betreiben eines Hybridfahrzeugs.

In gewissen Fällen wird bei einem Schlupfstart eine Regelung der Drehzahl der Elektromaschine vorgenommen. Jedoch wird diese Drehzahlregelung durch das zur Überwindung der Reibung und zur Drehbeschleunigung vom Verbrennungsmotor über die Trenn- oder Hybrid-Kupplung aufgenommene Übertragungsmoment gestört, das an der Elektromaschine zu einem Drehzahleinbruch führt. Bei einer starken Regelabweichung zwischen der Ist- und der Soll-Drehzahl der Elektromaschine ist im Fahrzeug ein starker Ruck zu spüren.

Um diesen Ruck zu vermeiden, wurde von der Anmelderin in der Deutschen Patentanmeldung 10 2007 010 770.8 vorgeschlagen, zur Vorsteuerung des Soll-Drehmoments der Elektromaschine zu einer von einer Drehzahlsteuerung der Elektromaschine ausgegebenen Stellgröße in Form eines Stellmoments eine Korrekturgröße in Form eines Übertragungsmoments der Trenn- oder Hybrid-Kupplung zu addieren. Wenn als Übertragungsmoment ein gemessenes oder über die Höhe der Andruckkräfte von Kupplungsscheiben der Trenn- oder Hybrid-Kupplung geschätztes Ist-Übertragungsmoment verwendet wird, wie in dieser Patentanmeldung hauptsächlich beschrieben, hat dies jedoch den Nachteil, dass zwischen der Anforderung des zur Vorsteuerung dienenden, von der Trenn- oder Hybrid-Kupplung rückgemeldeten Ist-Übertragungsmoments und der Umsetzung des Soll-Drehmoments in ein Ist-Drehmoment in der Elektromaschine wegen der CAN-Laufzeit und der für den Aufbau des Ist-Drehmoments in der Elektromaschine benötigten Zeit ein Zeitversatz vorhanden ist. Durch den Zeitversatz erfolgt die Umsetzung des vorgesteuerten Soll-Drehmoments in der Elektromaschine gegenüber der Umsetzung des Soll-Übertragungsmoments in der Trenn- oder Hybrid-Kupplung erst mit Verspätung. Da der Aufbau des Ist-Übertragungsmoments in der Trenn- oder Hybrid-Kupplung üblicherweise rampenförmig erfolgt, kann es daher zu einem "Schleppversatz" kommen, d.h. einer Zeitdifferenz zwischen dem rückgemeldeten Ist-Übertragungsmoment und dem Aufbau eines entsprechenden Ist-Drehmoments in der Elektromaschine, was ebenfalls zu einem Drehzahleinbruch bzw. einem Ruck beim Motorstart führen kann.

Jedoch wurde in der Deutschen Patentanmeldung 10 2007 010 770.8 auch bereits kurz vorgeschlagen, dass an Stelle eines Messwerts oder eines Schätzwerts, der anhand von in der Trenn- oder Hybrid-Kupplung gemessenen Größen abgeleitet wird, die Angabe für das Übertragungsmoment auch einer Kupplungs-Stellgröße entsprechen kann, die von einer Hybridbetriebs-Steuerschaltung der Trenn- oder Hybrid-Kupplung bereitgestellt wird, um das entsprechende Übertragungsmoment einzustellen.

Ausgehend hiervon liegt der Erfindung die Aufgabe zugrunde, weitere bzw. weitergehende Möglichkeiten vorzuschlagen, um den Übergang vom rein elektrischen Betrieb zum hybriden Betrieb in einem Fahrzeug mit Hybridantrieb noch komfortabler zu machen und insbesondere einen Einbruch des Gesamtdrehmoments im Antriebsstrang beim Starten des Verbrennungsmotors und damit einen spürbaren Ruck des Fahrzeugs zu vermeiden.

### Offenbarung der Erfindung

Diese Aufgabe wird durch die unabhängigen Anspüche gelost. Es wird insbesondere vorgeschlagen, dass die Steuerung der Drehzahl des Antriebsmotors in Abhängigkeit von einem Soll-Übertragungsmoment der Trenn- oder Hybrid-Kupplung erfolgt, mit dem der Antriebsmotor mit dem Verbrennungsmotor gekoppelt werden soll, bzw. dass Mittel zum Bereitstellen eines Soll-Übertragungsmoments vorgesehen sind, wobei die Drehzahlsteuerung ausgebildet ist, um das Steuern der Drehzahl des Antriebsmotors abhängig vom Soll-Übertragungsmoment durchzuführen.

Es ist weiter vorgesehen, dass die Drehzahl des Antriebsmotors gesteuert oder geregelt wird, um eine Ist-Drehzahl auf eine Soll-Drehzahl einzustellen, und dass ein von der Drehzahlsteuerung bzw. -regelung als Stellgröße ausgegebenes Stellmoment um das gewünschte Soll-Übertragungsmoment erhöht wird, um eine korrigierte Stellgröße in Form eines Soll-Drehmoments des Antriebsmotors zu erhalten.

Da das Soll-Übertragungsmoment in der Trenn- oder Hybrid-Kupplung in der Realität nicht ideal sondern mit einer gewissen Zeitverzögerung sowie mit einer Gradientenbegrenzung und einer sogenannten PT1-Filterung umgesetzt wird, wird in einer entsprechenden Weise auch das Soll-Übertragungsmoment vor der Korrektur der Stellgröße einer Zeitverzögerung, einer Steigungsbegrenzung und einer PT1-Filterung unterzogen.

Weitere vorteilhafte Ausgestaltungen der Erfindung sind in den abhängigen Ansprüchen angegeben.

### Kurze Beschreibung der Zeichnungen

Im folgenden wird die Erfindung anhand zweier in der Zeichnung dargestellter Ausführungsbeispiele näher erläutert. Es zeigen
Fig. 1 eine schematische Darstellung eines Hybridantriebs eines Kraftfahrzeugs mit einem Verbrennungsmotor, einer Elektromaschine und einer Trenn- oder Hybrid-Kupplung zur Erläuterung einer Regelung der Drehzahl bzw. eines Drehmoments der Elektromaschine durch Vorsteuerung mit einem Soll-Übertragungsmoment der Trenn- oder Hybrid-Kupplung;
Fig. 2 eine Darstellung des Soll-Übertragungsmoments und des Ist-Übertragungsmoments der Trenn- oder Hybrid-Kupplung über die Zeit zur Erläuterung der Umsetzung des Soll-Übertragungsmoments beim Schließen der Trenn- oder Hybrid-Kupplung;
Fig. 3 eine weitere schematische Darstellung des Hybridantriebs zur Erläuterung der Regelung der Drehzahl bzw. eines Drehmoments des Elektromaschine durch Vorsteuerung mit einem abgewandelten Soll-Übertragungsmoment der Trenn- oder Hybrid-Kupplung.

### Ausführungsformen der Erfindung

Der in der Zeichnung nur teilweise und schematisch dargestellte Hybridantrieb 1 eines Kraftfahrzeugs umfasst einen Verbrennungsmotor 2 und eine Elektromaschine 3, mit denen das Fahrzeug entweder rein elektrisch, d.h. bei abgestelltem Verbrennungsmotor 2 allein durch die Elektromaschine 3 und/oder bei abgestellter Elektromaschine 3 allein durch den Verbrennungsmotor 2 und/oder hybrid, d.h. sowohl durch den Verbrennungsmotor 2 und durch die Elektromaschine 3 angetrieben werden kann, die im zuletzt genannten Fall gemeinsam das Antriebsdrehmoment für einen zu den Antriebsrädern des Fahrzeugs führenden Antriebsstrang 8 des Fahrzeugs liefern.

Gewöhnlich wird für eine geringe Antriebsleistung der rein elektrische Betrieb bevorzugt und der Verbrennungsmotor 2 erst zugeschaltet, wenn entweder eine höhere Antriebsleistung abgefordert wird oder die Kapazität bzw. der Ladezustand einer den Energiespeicher der Elektromaschine 3 bildenden Fahrzeugbatterie (nicht dargestellt) unter einen vorgegebenen Schwellenwert absinkt.

Die Drehzahl der Elektromaschine 3 wird mit Hilfe eines Drehzahlreglers 6 geregelt, dem als Eingangsgrößen eine Solldrehzahl ω_{Soll} und eine von einem Drehzahlsensor 7 ermittelte Ist-Drehzahl ω_{Ist} einer Abtriebswelle 9 der Elektromaschine 3 zugeführt werden. Auch eine sensorlose Drehzahlregelung ist möglich.

Im rein elektrischen Betrieb erfolgt die Drehzahlregelung gemäß herkömmlicher und an sich bekannter Regelungsverfahren, indem in Abhängigkeit von einer Differenz zwischen der Ist-Drehzahl ω_{Ist} und der Soll-Drehzahl ω_{Soll} vom Drehzahlregler 6 eine Ausgangsgröße in Form eines Stellmoments M_{Stell} ausgegeben wird, um ein Soll-Drehmoment M_{Soll} der Elektromaschine 3 entsprechend der Differenz zwischen Ist-Drehzahl ω_{Ist} und Soll-Drehzahl ω_{Soll} zu verändern.

Bei einem Übergang vom rein elektrischen Betrieb zum hybriden Betrieb wird der Verbrennungsmotor 2 durch einen sogenannten "Schlupfstart" aus dem Stillstand gestartet, und zwar mit Hilfe einer zwischen dem Verbrennungsmotor 2 und der Elektromaschine 3 angeordneten Trenn- oder Hybrid-Kupplung 4, die im rein elektrischen Betrieb langsam geschlossen wird, um den Verbrennungsmotor 2 anzuschleppen.

Die Trenn- oder Hybrid-Kupplung 4 ist als sogenannte Proportionalkupplung ausgebildet, bei der ungeachtet einer Drehzahldifferenz zwischen der Drehzahl ω_{Ist} der Elektromaschine 3 und der Drehzahl des Verbrennungsmotors 2 ein gewünschtes Soll-Übertragungsmoment MÜ_{Soll} zwischen der zur Kupplung führenden Abtriebswelle 9 des Elektromotors 3 und einer ebenfalls zur Kupplung führenden Abtriebswelle 10 des Verbrennungsmotors 2 eingestellt werden kann. Eine solche Proportionalkupplung kann beispielsweise als Rutschkupplung, Schleifkupplung oder Schlupfkupplung ausgeführt sein, deren Ist-Übertragungsmoment MÜ_{Ist} entsprechend dem gewünschten Soll-Übertragungsmoment MÜ_{Soll} über die Andruckkraft zwischen zwei Kupplungsflächen gesteuert oder geregelt werden kann.

Die Aktivierung oder Betätigung der Trenn- oder Hybrid-Kupplung 4 zum Starten des Verbrennungsmotors 2 wird von einer zur Ansteuerung der Trenn- oder Hybrid-Kupplung 4 dienenden Hybridbetriebs-Steuerschaltung 5 vorgenommen, in der im rein elektrischen Betrieb abhängig von Betriebsgrößen des Kraftfahrzeugs, wie z.B. einem Fahrer-Wunschmoment an den Antriebsrädern, der Kapazität bzw. dem Ladezustand der Fahrzeugbatterie und dergleichen festgelegt wird, ob der Verbrennungsmotor 2 zugeschaltet werden soll, oder nicht. Wenn der Verbrennungsmotor 2 gestartet werden soll, wird die Trenn- oder Hybrid-Kupplung 4 von der Hybridbetriebs-Steuerschaltung 5 mit dem Soll-Übertragungsmoment MÜ_{Soll} angesteuert, woraufhin sich die Trenn- oder Hybrid-Kupplung 4 langsam schließt und ein von der Elektromaschine 3 zum Verbrennungsmotor 3 übertragenes Ist-Übertragungsmoment MÜ_{Ist} von Null bis zum Erreichen des Soll-Übertragungsmoments MÜ_{Soll} ansteigt.

Beim Aktivieren der Trenn- oder Hybrid-Kupplung 4 zum Übergang in den hybriden Betrieb wird der Abtriebswelle 9 der Elektromaschine 3 ein Drehmoment entzogen, das beim Start des Verbrennungsmotors 2 zur Überwindung der Reibung und für die Drehbeschleunigung der Kurbelwelle erforderlich ist. Dies bewirkt eine plötzliche Drehmomentänderung an der Abtriebswelle 9 der Elektromaschine 3, welche die Drehzahlregelung der Elektromaschine 3 stört, so dass es zu einer starken Abweichung der Ist-Drehzahl ω_{Ist} von der Soll-Drehzahl ω_{Soll} kommen kann. Da diese aufgrund der Regelverzögerung nicht sofort durch den Drehzahlregler 6 kompensiert werden kann, ist ohne entsprechende Gegenmaßnahmen im Fahrzeug ein merklicher Ruck zu spüren.

Um diesen Ruck zu vermeiden, wird das vom Drehzahlregler 6 ausgegebene Stellmoment M_{Stell} in einem Addierglied 11 korrigiert, indem dort ein Korrekturmoment zu dem Stellmoment M_{Stell} addiert wird, bevor das korrigierte Stellmoment als Soll-Drehmoment M_{Soll} zur Elektromaschine 3 zugeführt wird.

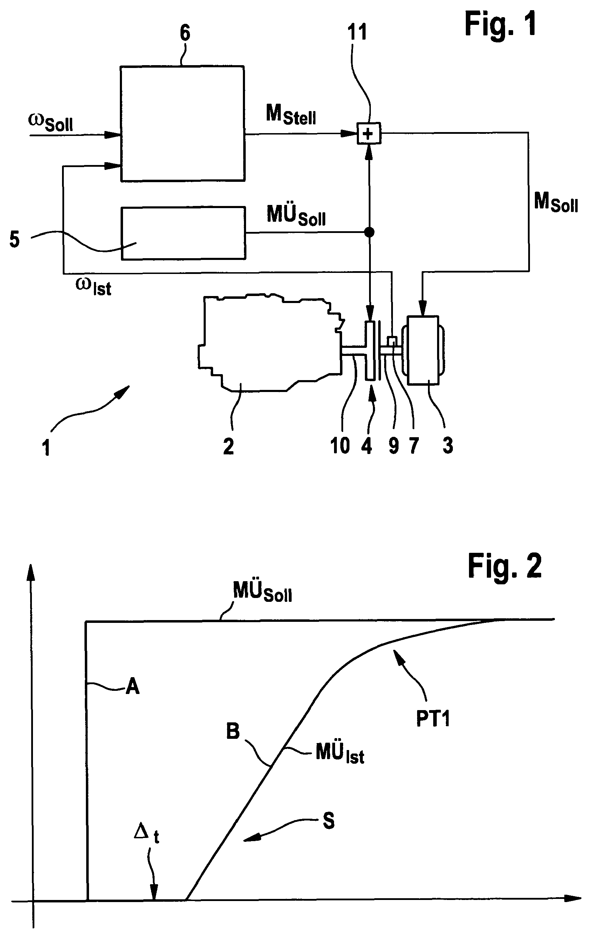

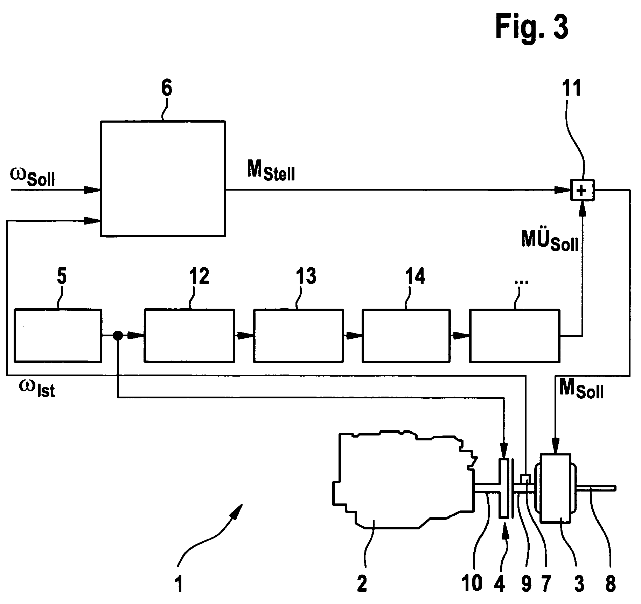

Bei dem in Fig. 1 dargestellten Hybridantrieb 1 entspricht das zum Stellmoment M_{Stell} addierte Korrekturmoment dem von der Hybridbetriebs-Steuerung 5 an der Trenn- oder Hybrid-Kupplung 4 eingestellten Soll-Übertragungsmoment MÜ_{Soll}. Dieses in Fig. 3 durch die Kurve A dargestellte Übertragungsmoment weist vor der Aktivierung der Trenn- oder Hybrid-Kupplung 4 den Wert Null und nach der Aktivierung der Trenn- oder Hybrid-Kupplung 4 den gewünschten Wert MÜ_{Soll} auf.

Da die Zeitdauer der Umsetzung des Soll-Übertragungsmoments MÜ_{Soll} in der Trenn- oder Hybrid-Kupplung 4, d.h. die Zeitdauer von der Aktivierung der Trenn- oder Hybrid-Kupplung 4 durch die Steuerung 5 bis zur Übertragung eines dem gewünschten Soll-Übertragungsmoment MÜ_{Soll} entsprechenden Ist-Übertragungsmoments MÜ_{Ist} von der Elektromaschine 3 über die Trenn- oder Hybrid-Kupplung 4 zum Verbrennungsmotor 2, ungefähr der Zeitdauer für die Umsetzung des Soll-Drehmoments M_{Soll} in der Elektromaschine 3 entspricht, d.h. der Zeitdauer für das Addieren des Soll-Übertragungsmoments MÜ_{Soll} zum Stellmoment M_{Stell} und der Realisierung eines dem korrigierten Soll-Drehmoment M_{Soll} entsprechenden Ist-Drehmoments in der Elektromaschine 3, fallen die Umsetzung des Soll-Übertragungsmoments MÜ_{Soll} in der Trenn- oder Hybrid-Kupplung 4 und die Umsetzung des Soll-Drehmoments M_{Soll} in der Elektromaschine 3 zeitlich zusammen. Im Idealfall wird somit im Regelkreis das infolge des Schließens der Trenn- oder Hybrid-Kupplung 4 auf die Abtriebswelle 9 aufgebrachte Störmoment exakt kompensiert, so dass der Schlupfstart ohne Regelabweichung und damit der Start des Verbrennungsmotors 2 ohne einen spürbaren Ruck erfolgt.

In der Realität setzt jedoch die Trenn- oder Hybrid-Kupplung 4 das Soll-Übertragungsmoment MÜ_{Soll} nicht entsprechend der in Fig. 2 dargestellten idealen Kurve A um, sondern entsprechend der in Fig. 2 dargestellten Kurve B, die den Verlauf des tatsächlichen Ist-Übertragungsmoments MÜ_{Ist} der Trenn- oder Hybrid-Kupplung 4 zeigt. Im Vergleich zu einer idealen Umsetzung des Soll-Übertragungsmoments MÜ_{Soll}, wie durch die Kurve A angezeigt, gibt es bei dieser Kurve B einige Abweichungen: Erstens setzt der Anstieg des Ist-Übertragungsmoments MÜ_{Ist} aufgrund der Laufzeit der CAN-Steuersignale erst nach einer gewissen Zeitverzögerung Δt ein. Zweitens weist der Anstieg des Ist-Übertragungsmoments MÜ_{Ist} bedingt durch eine maximale Verstellgeschwindigkeit eines zur Betätigung der Trenn- oder Hybrid-Kupplung 4 dienenden Stellorgans eine begrenzte Steigung S auf. Drittens ist bei derartigen Systemen generell ein als PT1-Filterung bekannter Effekt zu beobachten, nämlich eine Abflachung der Steigung bei Annäherung an das gewünschte Soll-Übertragungsmoment MÜ_{Soll}.

Um zu vermeiden, dass diese und weitere Einflüsse bei der Umsetzung des Soll-Übertragungsmoments MÜ_{Soll} in der Trenn- oder Hybrid-Kupplung 4 beim Schlupfstart zu einer Regelabweichung bei der Drehzahlregelung führen und um das zeitliche Verhalten der Trenn- oder Hybrid-Kupplung 4 besser nachzubilden, wird das von der Steuerung 5 ausgegebene Soll-Übertragungsmoment MÜ_{Soll} bei dem in Fig. 3 dargestellten Hybridantrieb 1 vor der Zufuhr zum Addierglied 11 ebenfalls bei 12 einer Zeitverzögerung, bei 13 einer Steigungsbegrenzung und bei 14 einer PT1-Filterung sowie ggf. weiteren Veränderungen unterzogen, so dass die Korrektur des Stellmoments M_{Stell} im Addierglied 11 der Umsetzung des Soll-Übertragungsmoments MÜ_{Soll} in der Trenn- oder Hybrid-Kupplung 4 möglichst genau entspricht wird, um den Verlauf des Ist-Drehmoments der Elektromaschine 3 sowohl zeitlich als auch betragsmäßig möglichst genau an die durch das Schließen der Trenn- oder Hybrid-Kupplung 4 bedingte Drehmomentänderung in der Abtriebswelle 9 anzupassen.

## Patentansprüche

1. Verfahren zur Kompensation eines Übertragungsmoments (MÜ) einer Kupplung (4) zwischen einem geregelten Antriebsmotor (3), insbesondere einer Elektromaschine, und einem Verbrennungsmotor (2) eines Hybridantriebs (1) beim Übergang von einem ausschließlichen Betrieb mit dem Antriebsmotor (3) zu einem hybriden Betrieb, wobei beim hybriden Betrieb ein Gesamtmoment vom Antriebsmotor (3) und vom Verbrennungsmotor (2) gemeinsam bereitgestellt wird, wobei die Drehzahl (ω) des Antriebsmotors (3) mit Hilfe einer Stellgröße (M_{Stell}) gesteuert oder geregelt wird; wobei zum Durchführen des Übergangs der Verbrennungsmotor (2) durch Koppeln mit dem Antriebsmotor (3) über eine Proportionalkupplung (4) mit steuerbarem Übertragungsmoment (MÜ) angeschleppt wird, wobei die Steuerung oder Regelung der Drehzahl (ω) des Antriebsmotors (3) abhängig von einem Soll-Übertragungsmoment (MÜ_{Soll}), mit dem der Antriebsmotor (3) mit dem Verbrennungsmotor (2) gekoppelt werden soll, durchgeführt wird, und wobei die Drehzahl (ω) des Antriebsmotors (3) geregelt wird, um eine Ist-Drehzahl (ω_{Ist}) auf eine Soll-Drehzahl (ω_{Soll}) einzustellen; wobei die Stellgröße (M_{Stell}) in Abhängigkeit vom Soll-Übertragungsmoment (MÜ_{Soll}) verändert wird, um eine korrigierte Stellgröße (M_{Soll}) zu erhalten, **dadurch gekennzeichnet, dass** das Soll-Übertragungsmoment (MÜ_{Soll}) vor der Korrektur der Stellgröße (M_{Stell}) einer Zeitverzögerung unterzogen wird.

2. Verfahren nach Anspruch 1, **dadurch gekennzeichnet, dass** die Stellgröße einem Stellmoment (M_{Stell}) entspricht, wobei das Stellmoment (M_{Stell}) um das Soll-Übertragungsmoment (MÜ_{Soll}) erhöht wird, um als korrigierte Stellgröße ein korrigiertes Stellmoment (M_{Soll}) zum Ansteuern des Antriebsmotors (3) zu erhalten.

3. Verfahren nach Anspruch 1 oder 2, **dadurch gekennzeichnet, dass** das Soll-Übertragungsmoment (MÜ_{Soll}) vor der Korrektur der Stellgröße (M_{Stell}) einer Steigungsbegrenzung unterzogen wird.

4. Verfahren nach Anspruch 1 oder 2, **dadurch gekennzeichnet, dass** das Soll-Übertragungsmoment (MÜ_{Soll}) vor der Korrektur der Stellgröße (M_{Stell}) einer PT1-Filterung unterzogen wird.

5. Verfahren nach einem der Ansprüche 1 bis 4, **dadurch gekennzeichnet, dass** die Zeitverzögerung, die Steigungsbegrenzung bzw. die PT1-Filterung in Abhängigkeit von einer Betriebstemperatur vorgenommen wird.

6. Vorrichtung zur Kompensation eines Übertragungsmoments (MÜ) zwischen einem geregelten Antriebsmotor (3), insbesondere einer Elektromaschine, und einem Verbrennungsmotor (2) eines Hybridantriebs (1) bei einem Übergang zu einem hybriden Betrieb, bei dem der Verbrennungsmotor (2) gestartet wird, mit einer Drehzahlsteuerung oder -regelung (6), um die Drehzahl (ω) des Antriebsmotors (3) gemäß einer Stellgröße (M_{Stell}) zu steuern bzw. zu regeln; mit einer Kupplung (4), um beim Übergang den Verbrennungsmotor (2) an den Antriebsmotor (3) zu koppeln, so dass der Verbrennungsmotor (2) mit einem gewünschten Soll-Übertragungsmoment (MÜ_{Soll}) angeschleppt wird, wobei eine Übertragungsmoment-Bereitstellungseinrichtung (5) vorgesehen ist, um das Soll-Übertragungsmoment (MÜ_{Soll}) bereitzustellen, wobei die Drehzahlsteuerung oder -regelung (6) ausgebildet ist, um das Steuern bzw. Regeln der Drehzahl (ω) des Antriebsmotors (3) abhängig vom Soll-Übertragungsmoment (MÜ_{Soll}) durchzuführen, und wobei die Drehzahlsteuerung oder -regelung (6) die Drehzahl (ω) des Antriebsmotors (3) steuert bzw. regelt, um eine Ist-Drehzahl (ω_{Ist}) auf eine Soll-Drehzahl (ω_{Soll}) einzustellen; wobei die Stellgröße (M_{Stell}) der Drehzahlsteuerung oder -regelung (6) mit dem Soll-Übertragungsmoment (MÜ_{Soll}) beaufschlagt wird, um eine korrigierte Stellgröße (M_{Soll}) zu erhalten, **gekennzeichnet durch** Mittel (12) zur Veränderung des Soll-Übertragungsmoments (MÜ_{Soll}) vor der Korrektur der Stellgröße (M_{Stell}), in denen das Soll-Übertragungsmoment (MÜ_{Soll}) einer Zeitverzögerung unterzogen wird.

7. Vorrichtung nach Anspruch 6, **dadurch gekennzeichnet, dass** die Stellgröße einem Stellmoment (M_{Stell}) entspricht, wobei eine Addiereinheit (11) vorgesehen ist, um das Stellmoment (M_{Stell}) um das Soll-Übertragungsmoment (MÜ_{Soll}) zu erhöhen, so dass als korrigierte Stellgröße ein korrigiertes Stellmoment (M_{Soll}) zum Ansteuern des Antriebsmotors (3) erhalten wird.

8. Vorrichtung nach einem der Ansprüche 6 bis 7, **dadurch gekennzeichnet, dass** die Übertragungsmoment-Bereitstellungseinheit eine Hybridbetriebs-Steuerschaltung (5) ist, welche die Kupplung (4) mit dem Soll- Übertragungsmoment (MÜ_{Soll}) ansteuert.

9. Vorrichtung nach einem der Ansprüche 6 bis 8, **gekennzeichnet durch** Mittel (13,14) zur Veränderung des Soll-Übertragungsmoments (MÜ_{Soll}) vor der Korrektur der Stellgröße (M_{Stell}), in denen das Soll-Übertragungsmoment (MÜ_{Soll}) einer Steigungsbegrenzung und/oder einer PT1-Filterung unterzogen werden kann.

## Claims

1. Method for compensating for a transmission torque (MÜ) of a clutch (4) between a regulated drive motor (3), in particular of an electric machine, and an internal combustion engine (2) of a hybrid drive (1) at the transition from exclusive operation with the drive motor (3) to hybrid operation, wherein during hybrid operation a total torque is made available jointly by the drive motor (3) and the internal combustion engine (2), wherein the rotational speed (ω) of the drive motor (3) is open- or closed-loop controlled with the aid of a manipulated variable (Mₘₐₙᵢₚ), wherein in order to implement the transition the internal combustion engine (2) is tow-started by coupling it to the drive motor (3) via a proportional clutch (4) with a controllable transmission torque (MÜ), wherein the open- or closed-loop control of the rotational speed (ω) of the drive motor (3) is carried out as a function of a setpoint transmission torque (MÜₛₑₜₚ) with which the drive motor (3) is to be coupled to the internal combustion engine (2), and wherein the rotational speed (ω) of the drive motor (3) is closed-loop controlled in order to adjust an actual rotational speed (ω_{act}) to a setpoint rotational speed (ωₛₑₜₚ), wherein the manipulated variable (Mₘₐₙᵢₚ) is changed as a function of the setpoint transmission torque (MÜₛₑₜₚ), in order to obtain a corrected manipulated variable (Mₛₑₜₚ), **characterized in that** the setpoint transmission torque (MÜₛₑₜₚ) is subjected to a delay before the correction of the manipulated variable (Mₘₐₙᵢₚ).

2. Method according to Claim 1, **characterized in that** the manipulated variable corresponds to an actuating torque (M_{act}), wherein the actuating torque (M_{act}) is increased by the setpoint transmission torque (MÜₛₑₜₚ), in order to obtain a corrected actuating torque (Mₛₑₜₚ) as the corrected manipulated variable for the actuation of the drive motor (3).

3. Method according to Claim 1 or 2, **characterized in that** the setpoint transmission torque (MÜₛₑₜₚ) is subjected to gradient limitation before the correction of the manipulated variable (Mₘₐₙᵢₚ).

4. Method according to Claim 1 or 2, **characterized in that** the setpoint transmission torque (MÜₛₑₜₚ) is subjected to PT1 filtering before the correction of the manipulated variable (Mₘₐₙᵢₚ).

5. Method according to one of Claims 1 to 4, **characterized in that** the delay, the gradient limitation and/or the PT1 filtering are/is performed as a function of an operating temperature.

6. Device for compensating for a transmission torque (MÜ) between a regulated drive motor (3), in particular an electric machine, and an internal combustion engine (2) of a hybrid drive (1) at a transition to hybrid operation, in which the internal combustion engine (2) is started, having rotational speed open- or closed-loop control (6) for open- or closed loop controlling the rotational speed (ω) of the drive motor (3) according to a manipulated variable (Mₘₐₙᵢₚ) ; having a clutch (4) in order to couple the internal combustion engine (2) to the drive motor (3) at the transition, with the result that the internal combustion engine (2) is tow-started with a desired setpoint transmission torque (MÜₛₑₜₚ), wherein a transmission torque-supply device (5) is provided for supplying the setpoint transmission torque (MÜₛₑₜₚ), wherein the rotational speed open- or closed-loop control (6) is designed to carry out the open- or closed-loop control of the rotational speed (ω) of the drive motor (3) as a function of the setpoint transmission torque (MÜₛₑₜₚ), and wherein the rotational speed open- or closed-loop control (6) open- or closed-loop controls the rotational speed (ω) of the drive motor (3), in order to set an actual rotational speed (ω_{act}) to a setpoint rotational speed (ωₛₑₜₚ) ; wherein the setpoint transmission torque (MÜₛₑₜₚ) is applied to the manipulated variable (Mₘₐₙᵢₚ) of the rotational speed open- or closed-loop control (6), in order to obtain a corrected manipulated variable (Mₛₑₜₚ), **characterized by** means (12) for changing the setpoint transmission torque (MÜₛₑₜₚ) before the correction of the manipulated variable (Mₘₐₙᵢₚ), in which means (12) the setpoint transmission torque (MÜₛₑₜₚ) are subjected to a delay.

7. Device according to Claim 6, **characterized in that** the manipulated variable corresponds to an actuating torque (M_{act}), wherein an adder unit (11) is provided for increasing the actuating torque (M_{act}) by the setpoint transmission torque (MÜₛₑₜₚ), with the result that a corrected actuating torque (M_{act}) is obtained as the corrected manipulated variable for the actuation of the drive motor (3).

8. Device according to one of Claims 6 to 7, **characterized in that** the transmission torque-supply unit is a hybrid operation control circuit (5) which actuates the clutch (4) with the setpoint transmission torque (MÜₛₑₜₚ).

9. Device according to one of Claims 6 to 8, **characterized by** means (13, 14) for changing the setpoint transmission torque (MÜₛₑₜₚ) before the correction of the manipulated variable (Mₘₐₙᵢₚ), in which means (13, 14) the setpoint transmission torque (MÜₛₑₜₚ) can be subjected to gradient limitation and/or PT1 filtering.

## Revendications

1. Procédé de compensation d'un couple de transmission (MÜ) d'un embrayage (4) entre un moteur d'entraînement (3) régulé, notamment une machine électrique, et un moteur à combustion interne (2) d'un entraînement hybride (1) lors de la transition d'un fonctionnement utilisant exclusivement le moteur d'entraînement (3) à un entraînement hybride, dans lequel, lors d'un fonctionnement hybride, un couple total du moteur d'entraînement (3) et du moteur à combustion interne (2) est délivré en commun, dans lequel la vitesse de rotation (ω) du moteur d'entraînement (3) est commandée ou régulée à l'aide d'une grandeur de réglage (Mₛₜₑₗₗ) ; dans lequel, pour mettre en oeuvre la transition, le moteur à combustion interne (2) est mis à contribution par accouplement au moteur d'entraînement (3) par l'intermédiaire d'un embrayage proportionnel (4) ayant un couple de transmission (MÜ) pouvant être commandé, dans lequel la commande ou la régulation de la vitesse de rotation (ω) du moteur d'entraînement (3) est effectuée en fonction d'un couple de transmission nominal (MÜ_{Soll}) avec lequel le moteur d'entraînement (3) doit être accouplé au moteur à combustion interne (2), et dans lequel la vitesse de rotation (ω) du moteur d'entraînement (3) est régulée afin de régler une vitesse de rotation actuelle (ωᵢₛₜ) à une vitesse de rotation nominale (ω_{Soll}) ; dans lequel la grandeur de réglage (M_{Stell}) est modifiée en fonction du couple de transmission nominal (MÜ_{Soll}) afin d'obtenir une grandeur de réglage (M_{Soll}) corrigée, **caractérisé en ce que** le couple de transmission nominal (MÜ_{Soll}) est soumis à un retard temporel avant la correction de la grandeur de réglage (M_{Stell}).

2. Procédé selon la revendication 1, **caractérisé en ce que** la grandeur de réglage correspond à un couple de réglage (M_{Stell}), dans lequel le couple de réglage (M_{Stell}) est augmenté du couple de transmission nominal (MÜ_{Soll}) afin d'obtenir en tant que grandeur d'actionnement de réglage corrigée un couple (M_{Soll}) corrigé pour commander le moteur d'entraînement (3).

3. Procédé selon la revendication 1 ou 2, **caractérisé en ce que** le couple de transmission nominal (MÜ_{Soll}) est soumis à une limitation de pente avant la correction de la grandeur de réglage (M_{Stell}).

4. Procédé selon la revendication 1 ou 2, **caractérisé en ce que** le couple de transmission nominal (MÜ_{Soll}) est soumis à filtrage PT1 avant la correction de la grandeur de réglage (M_{Stell}).

5. Procédé selon l'une quelconque des revendications 1 à 4, **caractérisé en ce que** le retard temporel, la limitation de pente ou le filtrage PT1 est effectué en fonction d'une température de fonctionnement.

6. Dispositif de compensation d'un couple de transmission (MÜ) entre un moteur d'entraînement (3) régulé, notamment une machine électrique, et un moteur à combustion interne (2) d'un entraînement hybride (1) lors d'une transition à un fonctionnement hybride, dans lequel le moteur à combustion interne (2) est démarré avec une commande ou une régulation de vitesse de rotation (6) afin de commander ou de réguler la vitesse de rotation (ω) du moteur d'entraînement (3) conformément à une grandeur de réglage (M_{Stell}) ; comportant un embrayage (4) afin d'accoupler le moteur à combustion interne (2) au moteur d'entraînement (3) lors de la transition, de manière à ce que le moteur à combustion interne (2) soit mis à contribution avec un couple de transmission nominal (MÜ_{Soll}) souhaité, dans lequel il est prévu un dispositif de fourniture de couple de transmission (5) destiné à fournir le couple de transmission nominal (MÜ_{Soll}), dans lequel la commande ou la régulation de vitesse de rotation (6) est conçue pour effectuer la commande ou la régulation de la vitesse de rotation (ω) du moteur d'entraînement (3) en fonction du couple de transmission nominal (MÜ_{Soll}), et dans lequel la commande ou la régulation de vitesse de rotation (6) commande ou régule la vitesse de rotation (ω) du moteur d'entraînement (3) afin de régler une vitesse de rotation actuelle (ωᵢₛₜ) à une vitesse de rotation nominale (ω_{Soll}) ; dans lequel la grandeur de réglage (M_{Stell}) de la commande ou de la régulation de vitesse de rotation (6) est soumise au couple de transmission nominal (MÜ_{Soll}) afin d'obtenir une grandeur de réglage (M_{Soll}) corrigée, **caractérisé par** des moyens (12) destinés à modifier le couple de transmission nominal (MÜ_{Soll}) avant la correction de la grandeur de réglage (M_{Stell}), dans lesquels le couple de transmission nominal (MÜ_{Soll}) est soumis à un retard temporel.

7. Dispositif selon la revendication 6, **caractérisé en ce que** la grandeur de réglage correspond à un couple de réglage (M_{Stell}), dans lequel il est prévu une unité additionneuse (11) destinée à augmenter le couple de réglage (M_{Stell}) du couple de transmission nominal (MÜ_{Soll}) de manière à ce qu'un couple de réglage (M_{Soll}) corrigé soit obtenu en tant que grandeur de réglage corrigée pour commander le moteur d'entraînement (3).

8. Dispositif selon l'une quelconque des revendications 6 à 7, **caractérisé en ce que** l'unité de fourniture de couple de transmission est un circuit de commande d'entraînement hybride (5) qui commande l'embrayage (4) avec le couple de transmission nominal (MÜ_{Soll}).

9. Dispositif selon l'une quelconque des revendications 6 à 8, **caractérisé par** des moyens (13, 14) destinés à modifier le couple de transmission nominal (MÜ_{Soll}) avant la correction de la grandeur de réglage (M_{Stell}), dans lesquels le couple de transmission nominal (MÜ_{Soll}) peut être soumis à une limitation de pente et/ou à un filtrage PT1.
